(19) Europäisches Patentamt

European Patent Office

Office européen des brevets

(11) Veröffentlichungsnummer: **0 228 007 B1**

(12) **EUROPÄISCHE PATENTSCHRIFT**

(45) Veröffentlichungstag der Patentschrift: **15.04.92**

(21) Anmeldenummer: **86117350.8**

(22) Anmeldetag: **12.12.86**

(51) Int. Cl.⁵: **B23B 31/28**, B23B 31/16, B23B 23/00

──────────────────────────────

(54) **Werkzeugmaschine und deren Betriebsverfahren.**

──────────────────────────────

(30) Priorität: **28.12.85 DE 3546251**
**28.12.85 DE 3546252**
**06.09.86 DE 3630441**

(43) Veröffentlichungstag der Anmeldung:
**08.07.87 Patentblatt 87/28**

(45) Bekanntmachung des Hinweises auf die
Patenterteilung:
**15.04.92 Patentblatt 92/16**

(84) Benannte Vertragsstaaten:
**DE FR GB IT SE**

(56) Entgegenhaltungen:
**DE-C- 3 314 629**
**GB-A- 1 266 132**
**GB-A- 2 067 931**
**GB-A- 2 068 272**
**US-A- 4 199 286**

(73) Patentinhaber: **Paul Forkardt GmbH & Co. KG**
**Heinrich-Hertz-Strasse 7**
**W-4006 Erkrath-Unterfeldhaus(DE)**

(72) Erfinder: **Bald, Hubert, Dipl.-Ing.**
**Schützenstrasse 1**
**W-5920 Bad Berleburg(DE)**

(74) Vertreter: **Sparing Röhl Henseler Patentan-**
**wälte European Patent Attorneys**
**Rethelstrasse 123**
**W-4000 Düsseldorf 1(DE)**

EP 0 228 007 B1

**Beschreibung**

Die Erfindung betrifft eine Werkzeugmaschine mit den im Oberbegriff des Patentanspruchs 1 genannten Merkmalen. Eine solche Maschine ist in der DE-PS 33 14 629 offenbart.

Bei der Maschine kann es sich um eine Drehmaschine handeln oder auch um eine Fräsmaschine mit einem elektrischen Werkzeugspanner oder auch um eine Bohr- oder Shleifmaschine und dergleichen.

Aus einem Prospekt der Firma Siemens "Elektromechanischer Antrieb für Reitstockpinolen", undatiert, ist eine Anordnung bekannt, die an den Reistock von Drehmaschinen angeflanscht werden kann und einen Drehstrom-Asynchronmotor umfaßt, der zwecks Wechsel zwischen praktisch lastfreiem Eilgang und belastetem Schleichgang polumschaltbar ausgebildet ist. Eine Dehnmeßstreifenanordnung erfaßt die nach dem Auftreffen auf das Werkstück aufgebaute Spannkraft zwecks Einstellung derselben nach einem vorgegebenen Wert.

Die Andrückkraft wird in einem Tellerfederpaket gespeichert.

Aufgabe der vorliegenden Erfindung ist es, die gattungsgleiche Werkzeugmaschine zu verbessern und derart weiterzubilden, daß der Spannvorgang verkürzt, die Baugröße verringert, die Verfügbarkeit der Maschine als Ganzes verbessert und die Gesamtherstellkosten der Maschine verringert werden.

Diese Aufgabe wird gemäß der Erfindung durch die im kennzeichnenden Teil des Patentanspruchs 1 genannten Merkmale gelöst.

Die Erfindung beruht auf den folgenden Überlegungen:
Der für den Spannantrieb vorgesehene Motor muß ziemlich extremen Bedingungen genügen. Zumindest sein Rotor soll geringe Axial- und vor allem Radialabmessungen aufweisen, damit das Trägheitsmoment gering bleibt. Trotzdem soll er - wenn auch nur kurzzeitig - ein extrem hohes Drehmoment speziell bei niedrigen Drehzahlen abgeben, aber auch mit hohen Maximaldrehzahlen betrieben werden können, damit sowohl hohe Spannkräfte als auch geringe Stellzeiten erzielt werden können. Zudem muß der Motor mit hoher Dynamik regelbar sein, um während des nur über ca. 2 Motorumdrehungen zu vollziehenden Aufbaus der Spannkraft, von zuvor maximaler Drehzahl ausgehend, eine geregelte Motorstillsetzung zu erreichen.

Alle diese Bedingungen lassen sich durch Verwendung eines polumschaltbaren Motors nicht oder nur sehr unvollkommen gemeinsam verwirklichen.

Es sind jedoch Ansteuergeräte mit integriertem Mikrorechner bekannt, die nach dem Prinzip der Frequenzumsetzung arbeiten (Prospektblatt der Firma AMK "PUMASYN Drehstromregelantriebe") und, angepaßt an einen entsprechenden Spannantriebsmotor, die oben aufgestellten Forderungen zu erfüllen gestatten. Die Erfindung sieht demzufolge vorzugsweise den Einsatz derartiger Steuergeräte vor, um die damit für den Spannmotor gebotene Möglichkeit der Kombination von sowohl extrem hohen Drehmomenten im Bereich niedriger Drehzahlen als auch sehr hoher Maximaldrehzahlen nutzen zu können. Das Erreichen der - auf die Baugröße bezogenen - sehr hohen Drehmomente bei niedriger Drehzahl ist auf die Tatsache zurückzuführen, daß bei dem dem Motor aufgeschalteten Strom die Werte für die magnetisierende Stromkomponente und die Werte für die drehmomentbildende Stromkomponente vom Mikrorechner in stetiger Anpassung an den Motor-Betriebszustand optimal dosiert werden können.

Dadurch bedingt, kann bei gleicher Baugröße und bei gleicher, dem Motorstator zugeführten elektrischen Leistung beim Einsatz des vorgesehenen Ansteuergeräts am Spannmotor z.B. ein Anfahrdrehmoment erreicht werden, welches um den Faktor 8 bis 10 mal größer ist als bei einer Ansteuerungsweise, welche diese Stromkomponenten-Dosierung nicht vorsieht, beispielsweise bei einer Ansteuerung durch ein Schaltschütz oder durch ein Ansteuergerät mit Phasenanschnitt.

Die benötigte hohe Regeldynamik - vor allem beim geregelten Aufbau der Spannkraft unter Beteiligung eines Feder-Spannkraftspeichers - wird ebenfalls durch die rechnergeführte Stromkomponenten-Dosierung erreicht. Für den praktischen Einsatz allerdings erweist sich das System, bestehend aus Drehstrommotor und rechnergeführtem Ansteuergerät, als wesentlich zu teuer im Vergleich mit dem herkömmlichen hydraulischen Spannsystem.

Deshalb berücksichtigt das erfindungsgemäße Konzept die Tatsache, daß in aller Regel die Spannvorgänge der infrage kommenden Werkzeugmaschinen während des Stillstands zumindest des Spindelantriebsmotors, gegebenenfalls auch von zusätzlich vorgesehenen Vorschubmotoren ablaufen, sowie, daß diese Motoren ohnehin mit einem komfortablen Ansteuergerät betrieben werden. Verwendet man nun als diesen mindestens einen weiteren Motor, ebenfalls einen Drehstrommotor, so kann dieser alternierend dasselbe Ansteuergerät "mitbenutzen" wie der Spannmotor.

Das Ansteuergerät ist für diesen Zweck allerdings zu modifizieren. Seine Ausgänge werden alternierend dem einen oder dem anderen Motor zugeschaltet und ebenso die Eingänge, denen das IST-Signal von den Motoren zugeführt wird; im einfachsten Fall handelt es sich dabei um das Ausgangssignal eines am Motor vorgesehenen Winkelstellungsgebers. Außerdem werden nur in Ausnahmefällen die beiden anzusteuernden Motoren ganz gleiche Parameter aufweisen; solche Parameter sind aber für den Betrieb des Ansteuergeräts zu berücksichtigen, und ganz dasselbe gilt auch für die Regelcharakteristik, die z.B. für einen Drehmaschinen-Spindelantrieb anders gewünscht wird als für den Spannantrieb. Bei Umschaltung der Aus-und Eingänge des Ansteuergeräts wird mithin auch auf die jeweils für den zugehörigen Motor geltenden Parameter und Regelalgorithmen umgeschaltet; entsprechendes gilt für die SOLL- und IST-Werte der Motoren.

Diese Konzeption ist wesentlich weniger aufwendig, als wenn jedem einzelnen Motor ein eigenes Ansteuergerät zugeordnet würde, da die teuren Komponenten, insbesondere die Leistungsstufe, nicht modifiziert zu werden und nur einmal vorhanden zu sein brauchen.

Dies ergibt aber auch eine höhere Verfügbarkeit für die gesamte Werkzeugmaschine, da sich die Wahrscheinlichkeit von auftretenden Störungen aufgrund der geringeren Anzahl der involvierten Bauelemente entsprechend verringert.

Die erfindungsgemäße Konzeption wirkt sich auch auf die Ausbildung der mechanischen Teile des Spannaggregats aus. Gemäß der Lehre der eingangs genannten DE-PS 33 14 629 ist der Stator des Spannantriebsmotors stationär angeordnet, der Rotor läuft mit der Spindel um, und sein Antriebsmoment wird mittels eines Wälzschraubtriebs in eine Axialbewegung zum Antrieb von Spannbakken umgesetzt. Da dieses System sehr reibungsarm ist, erlaubt es mit entsprechender Ansteuerung des Spannantriebsmotors auch eine genaue Dosierung der Spannkräfte.

Eine weitere konventionelle Bauart von Spannaggregaten mit elektrischem Antriebsmotor ist in der Firmendruckschrift der Paul Forkardt GmbH & Co. KG # 500.01.7D/1979 "Elektrospanner" beschrieben.

Diese Elektrospanner umfassen einen Elektromotor, der für das Spannen von Werkzeugen, etwa bei Fräsmaschinen, stationär sein kann und nur für den Spannvorgang angekuppelt wird, aber auch bei Drehmaschinen mit der Spindel umlaufend ausgebildet sein kann. Das Antriebsmoment des Motors wird über ein Untersetzungsgetriebe und einen Drehmomentenbegrenzer auf die Mutter eines Gleit-Schraubtriebs übertragen, welcher mit einem Zug-/Druckrohr zusammenwirkt. Der Drehmomentenbegrenzer ist als ein sogenanntes Rastgesperre ausgeführt, bei welchem die an zwei unterschiedlichen Teilen angebrachte Stirnverzahnung nach Überwindung einer einstellbaren Federkraft ausrasten kann. Durch Veränderung der Federkraft kann damit die auf das Zug-/Druckrohr eingeleitete Spannkraft verändert werden. Indem man nach Erreichen des Grenz-Drehmoments das Rastgesperre über mehrere Zähne ein- und ausrasten läßt, wird das vom Elektromotor kontinuierlich abgegebene Drehmoment in eine Folge von Drehmoment-Impulsen umgewandelt, womit man eine Erhöhung der durch den Gleit-Schraubtrieb erzeugten Spannkraft erreicht.

Um einen bei den heute üblich hohen Drehzahlen von Werkzeugmaschinen-Arbeitsspindeln stets empfehlenswerten Spannkraftspeicher zu realisieren, ist zwischen Zug-/Druckrohr und Spannmittel (z.B. Drehmaschinen-Spannfutter) in der Bohrung der Arbeitsspindel ein mit Tellerfedern aufgebautes Feder-Element zwischengeschaltet.

Die Nachteile der Bauart mit Gleit-Schraubtrieb sind folgende:

Die Einstellung der Spannkraft an dem mechanischen Drehmomentenbegrenzer ist relativ ungenau und schwierig, manuell vorzunehmen und daher verhältnismäßig zeitraubend sowie kaum automatisierbar. Zu der durch die Einstellmöglichkeit bedingten Ungenauigkeit der Spannkraft gesellt sich noch eine weitere, und zwar größere, Ungenauigkeitskomponente. Diese rührt von der großen Streubreite des jeweils im Gleit-Schraubtrieb wirksamen Reibungskoeffizienten her. Der Reibungskoeffizient kann von $\mu$ = 0,1 bei einem gut geschmierten und sauberen Gleit-Schraubtrieb bis über $\mu$ = 0,2 bei Schmierstoffmangel und ungenügender Wartung reichen. Dies bedeutet selbst bei konstant bleibendem Grenzdrehmoment eine mögliche Spannkraftschwankung von 100 %.

Die erzielbaren Hubgeschwindigkeiten sind zu klein und müßten wenigstens 20 mm/Sek betragen. Die davon abhängigen Öffnungs- und Schließzeiten gehen nämlich unmittelbar in die unproduktiven Nebenzeiten ein. Die kleinen Hubgeschwindigkeiten haben ihre Ursache darin, daß die durch Wendeschütze angesteuerten Asynchron-Drehstrommotoren ein relativ niedriges Drehmoment abgeben, so daß zur Erzielung der notwendigen Spannkräfte eine relativ hohe Getriebeuntersetzung notwendig wird. Die Erhöhung der Motordrehzahl über 3000 U/min ist bei Netzfrequenz von 50 Hz prinzipiell nicht möglich, und eine Erhöhung der Motorleistung verbietet sich wegen des notwendigerweise zu vergrößernden Bauvolumens, insbesondere des mit der Spindel umlaufenden Motorstators, dessen Schwungmoment damit beträchtlich vergrößert würde. Mit dem zuletzt angesprochenen Umstand hängt schließlich auch noch ein weiterer Nachteil zusammen.

Bei heutigen mordernen Drehmaschinen werden Drehzahlen von 6500 U/min und mehr gefahren. Beim Einsatz von Elektrospannern mit umlaufendem Motorstator wären wegen der bei diesen Drehzahlen extrem hohen Fliehkräfte schnell die Grenzen für die Festigkeit der Motorenbauteile erreicht.

Die funktionelle Überlegenheit des Spannaggregats mit Wälzschraubtrieb muß allerdings durch beträchtlich höhere Herstellkosten erkauft werden, welche sich vor allem durch das notwendige aufwendigere Ansteueraggregat für den Eletromotor sowie durch den Wälz-Schraubtrieb ergeben.

Die höheren Herstellkosten des Elektrospanners mit Wälzschraubtrieb sind sicherlich dann vertretbar, wenn bei der praktischen Anwendung alle Funktionsvorteile genutzt werden.

In vielen Anwendungsfällen werden jedoch selbst bei modernen Drehmaschinen die aus einem Wälzschraubtrieb resultierenden Vorteile nicht voll genutzt.

Dies trifft insbesondere zu, wenn am Elektrospanner keine Durchgangsbohrung zur Durchführung von Stangenarbeiten benötigt wird und wenn die im Vergleich zu einem Wälzschraubtrieb beim Gleit-Schraubtrieb bis zum Erreichen der Verschleißgrenze mögliche, beträchtlich geringere Anzahl von Spannvorgängen in Kauf genommen werden kann.

Die Nachteile des Gleitschraubtriebs lassen sich allerdings mildern, wenn die miteinander im Eingriff stehenden Gewindeflächen der Mutter und/oder der Spindel einer die Trockenreibung herabsetzenden Oberflächenbehandlung unterzogen werden. Es ist möglich, noch nach den üblichen metallurgischen Härtearbeitsgängen festhaftende sehr dünne Schichten aus extrem hartem und reibungsminderndem Material aufzutragen, und zwar vorzugsweise nach dem CVD-Verfahren aus der Gasphase niederzuschlagen. Zu den Schichtmaterialien gehört z.B. Titannitrid, doch ist besonders ein diamantartiger Kohlenstoff geeignet, wie er in der Veröffentlichung "Battelle aktuell" vom 2.9.86 oder der Arbeit "Inon Beam Deposition of Thin Films of Diamondlike Carbon", von Aisenberg/Chabot in J.Appl. Phys., 42/1971, S. 2935-2958 beschrieben ist.

Einen so hinsichtlich der Reibungsverhältnisse verbesserten Gleitschraubtrieb kann man dann mit größerm Durchmesser ausführen, gegebenenfalls sogar hohl, ohne daß ein leistungsstärkerer Spannantriebsmotor benötigt würde. Umgekehrt könnte man auch bei kleinem Durchmesser des Triebs einen kleineren Motor wählen, oder auf ein Untersetzungsgetriebe verzichten. Schließlich ist es auch möglich, diese Maßnahmen miteinander zu kombinieren.

Um ein solches Spannaggregat bei schnellaufenden Drehmaschinen einzusetzen, empfiehlt es sich, nicht nur den Stator, sondern auch den Rotor des Spannantriebsmotors bezüglich des Arbeitsspindelumlaufs stationär anzuordnen und ihn für den Spann/Entspannvorgang mit dem Trieb zu kuppeln; diese Kupplung ist vorzugsweise elektrisch schaltbar.

Die Erfindung wird nachstehend unter Bezugnahme auf die beigefügten Zeichnungen im einzelnen erläutert.

Fig. 1     ist ein Blockschaltbild einer Werkzeugmaschine;

Fig. 2     zeigt einen Vertikalschnitt durch einen Spindelstock einer Drehmaschine gemäß der Erfindung;

Fig. 3     ist ein Axialschnitt durch den Spannantriebsmotor aus Fig. 2;

Fig. 4     ist ein Axialschnitt durch das Zug-/Druckrohr aus Fig. 2;

Fig. 5     ist ein Teilaxialschnitt durch den Spindelstock einer Drehmaschine bei einer zweiten Ausführungsform der Erfindung;

Fig. 6     zeigt ein Diagramm, in dem für einen Spannvorgang die Spannkraft und die Motorwinkelgeschwindigkeit in Abhängigkeit von Rotordrehwinkel aufgezeichnet sind;

Fig. 7     stellt im Längsschnitt den Reitstock einer Drehmaschine gemäß der Erfindung dar.

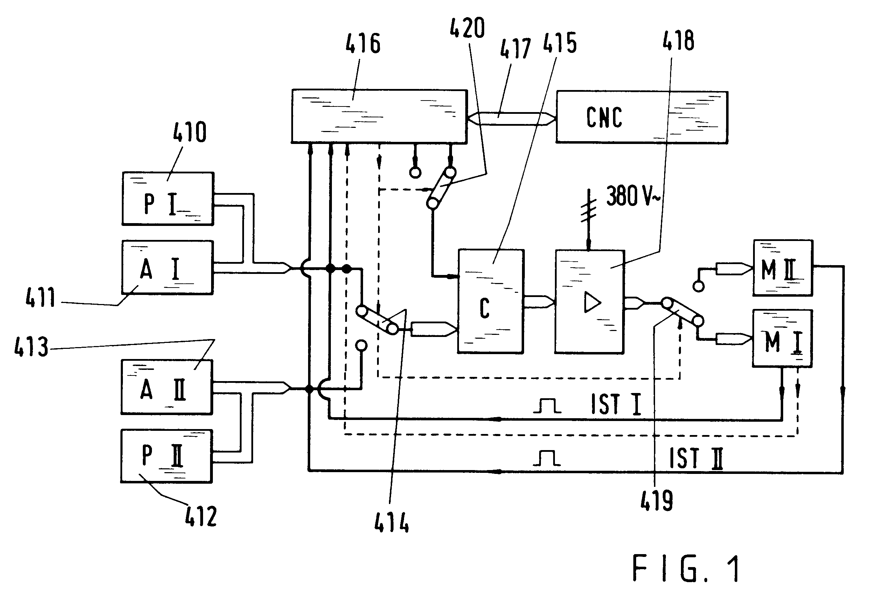

Das Prinzip der Erfindung soll zunächst unter Bezugnahme auf das beigefügte Blockschaltbild gemäß Fig.1 erläutert werden.

Als Beispiel sei eine Drehmaschine mit einem Motor MI für den Spannantrieb und einem Motor MII für den Arbeitsspindelantrieb angenommen. Jeder Motor ist mit einem Drehwinkelgeber bestückt, der z.B. pro Grad Drehwinkel einen Ausgangsimpuls liefert. Durch Differenzieren nach der Zeit erhält man die Drehgeschwindigkeit, durch nochmaliges Differenzieren die Drehbeschleunigung. Die benötigten Motorparameter (z.B. Trägheitsmoment des Rotors und sonstige Festdaten) sind in zugehörigen Speichern 410 für Motor MI, 412 für Motor MII abgespeichert.

Ähnlich sind auch die entsprechenden Regelalgorithmen in Speichern 411 (für Motor MI) bzw. 413 (für Motor MII) festgehalten. Die IST-Werte und die Ausgänge der Speicher - der Einfachheit halber sind die Verbindungen als Busse dargestellt - gelangen zu einem Umschalter 414, so daß dem Regler 415 nur die jeweils zusammengehörigen Daten zugeführt werden können. Die IST-Werte sind außerdem einer Schnittstelle 416 aufgeschaltet, die über einen Bus 417 im Dialog mit einer üblichen CNC-Maschinesteuerung steht. Die Stellsignale des Reglers 415 gelangen zu einem Stellgrößen-Umsetzer oder einer Endstufe 418, die die zugeführte Netzleistung, hier 380 V Netzspannung, dreiphasig, in die jeweils benötigten eingeprägten Statorströme der beiden Motoren umsetzt, die je nach Position des Schalters 419 einem der Motoren MI bzw. MII aufgeschaltet werden. Die CNC-Steuerung liefert auch die Sollwerte über die Schnittstelle, und auch die Sollwerte werden jeweils umgeschaltet mittels Schalter 420. Alle drei Schalter werden von der CNC-Steuerung aus, über die Schnittstelle, gesteuert. Die dargestellten Schalter, vornehmlich jedoch die Schalter 414 und 420, können in der Praxis natürlich als Halbleiter-Schalter ausgeführt sein.

Es sei angenommen, daß gerade ein Werkstück fertig bearbeitet und ausgespannt worden ist. Die Schalter befinden sich in der dargestellten Schaltposition, da als letztes bei stillstehender Arbeitsspindel das Spannfutter von Motor MI in Ausspannrichtung betätigt worden ist. Nach Einsetzen eines neuen Rohlings in das Futter wird Motor MI mit Strom gespeist derart, daß er mit maximaler Drehbeschleunigung bis zu einer Solldrehzahl hochläuft, was durch Vergleich der IST- und SOLL-Werte überwacht wird. Aufgrund der Rohlingstoleranzen ist nicht vorhersehbar, wieviele Umdrehungen der Spannmotor ausführen kann. Bei Auftreffen der vom Motor MI angetriebenen Spannmittel (Spannbacken eines Futters beispeilsweise) auf das Werkstück wird mittels eines Spannkraft-Sensors ein Signal generiert, welches eine stetige Herabsetzung der Drehfrequenz bei gleichzeitigem Anstieg der Spannkraft bewirkt, derart, daß genau mit Erreichen des vorgesehenen Spannkraft-Wertes die Drehgeschwindigkeit des Spannmotors einen bestimmten vorgeschriebenen Restwert, hier den Wert Null, annimmt.

Je nach Auslegung des Ansteuergeräts bestehen zwei weitere Möglichkeiten, ein Auslösesignal zu gewinnen, wenn die Spannmittel auf beispielsweise ein Werkstück auftreffen: Wenn das Ansteuergerät so ausgelegt ist, daß es die Drehzahl des Motors auf einen konstanten Wert regelt, führt die plötzliche hohe Belastung zu einem starken Anstieg des benötigten Stroms, der erfaßt und ausgewertet werden kann.

Ist hingegen das Ansteuergerät so ausgelegt, daß auf konstantes abgegebenes Drehmoment geregelt wird, so führt der plötzliche Belastungsan stieg zum Absinken der Drehzahl, was über den entsprechenden Geber (IST-Wert) erfaßt und ausgewertet werden kann. In der zeichnerischen Darstellung ist der Einfachheit halber der letztgenannte Fall angenommen; für den Fachmann versteht es sich, daß dem Regler zusätzlich das Ausgangssignal des Spannkraft-Sensors aufzuschalten ist, wenn mit einem solchen gearbeitet wird (mit gestrichelter Linie angedeutet).

Nachdem damit der Spannvorgang beendet ist, kann auf Motor MII zwecks Durchführung der Bearbeitungsgänge umgeschaltet werden. Die hierfür nötigen Befehle werden in üblicher Weise von der CNC-Steuerung geliefert. Nach Ablauf des Bearbeitungsprogramms werden die Schalter wieder umgelegt, und zum Ausspannen des Werkstücks laufen die Vorgänge sinngemäß rückwärts ab.

Es ist anzumerken, daß der Leistungsbedarf für einen Arbeitsspindelantrieb einer Drehmaschine und für ihren Spannfutterantrieb mindestens in etwa vergleichbare Größe haben, so daß die Dimensionierung der Endstufe für beide paßt. Es ist noch darauf hinzuweisen, daß anstelle des Spannfutterantriebs, oder alternierend mit diesem, auch der Antrieb für die Reitstockpinole mit dem Hauptspindelantrieb-Ansteuergerät betätigbar ist. Die Übertragung der Erfindung auf andere Typen von Maschine ergibt sich für den Fachmann aus den vorstehenden Ausführungen ohne weiteres.

Die Einschaltdauer des Spannantriebsmotors liegt im allgemeinen höchstens bei 2 %, wobei die Maximalleistung nur während eines Bruchteils dieser Zeit aufzubringen ist. Der Motor kann also sehr klein ausgeführt werden, ohne daß die Gefahr thermischer Überlastung besteht. Dagegen ist der Spindelantrieb für eine Einschaltdauer von 100 % auszulegen, so daß der Motor MII wesentlich größer als der Motor MI sein wird. Dies läßt sich jedoch durch die dem Regler aufgeschalteten unterschiedlichen Parameter berücksichtigen, ebenso wie die daraus resultierenden unterschiedlichen Regelalgorithmen.

Im Blockschaltbild nach Fig. 1 sind die Umschaltvorgänge und der entsprechende alternierende Zugriff auf die Motorparameter, Regelalgorithmen, IST-Werte und SOLL-Werte dem internen Rechner des Ansteuergeräts zugeordnet; man kann alternativ auch den Rechner einer übergeordneten CNC-Steuerung der Gesamtmaschine benutzen.

Der Drehstrommotor ist vorzugsweise als Kurzschlußläufermotor, vorzugsweise als Asynchronmotor, ausgeführt, denn dies hat preisliche und bauliche Vorteile, insbesondere dann, wenn der Stator des Spannantriebsmotors stationär ist, sein Rotor aber mit der Spindel umläuft.

Da aus Kostengründen natürlich Spannaggregate mit Gleitschraubtrieb bevorzugt sind, wird nachstehend primär auf solche Spannaggregate eingegangen.

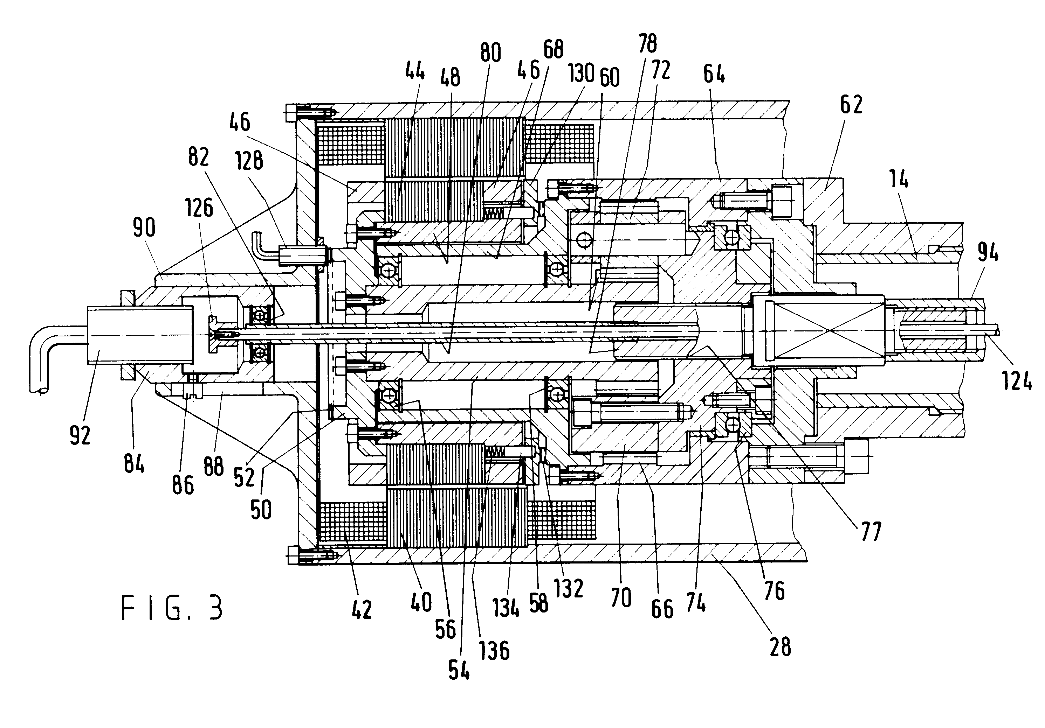

Um die Anforderungen an das Motor-Ansteuergerät verdeutlichen zu können, werden zunächst einige Zusammenhänge und Fakten näher erläutert. Dafür werden nachfolgend einige konkrete Dimensionierungsdaten genannt, wie sie beispielsweise für das in Fig. 3 dargestellte, später im Detail erläuterte Spannaggregat gültig sein könnten.

Die zu erzeugende Spannkraft $F_A$ betrage 70.000 N. Im Interesse eines möglichst niedrigen Verschleißes wird der Gewindedurchmesser D des Gleit-Schraubtriebs größer, als von der Materialfestigkeit her eigentlich notwendig wäre, und zwar auf D = 40 mm ausgelegt. Die Gewindesteigung wird mit p = 2 mm angenommen. Das bei einem Betrieb ohne jegliche Reibung theoretisch notwendige Drehmoment $M_{ds}$ am Gleit-Schraubtrieb beträgt nach einer vereinfachten Formel mit

$$M_{ds} = \frac{F_A \cdot p}{2\pi} \approx 22 \text{ Nm}.$$

Bei einem angenommenen oberen Wert von $\mu$ = 0,2 für den Reibungskoeffizienten erhält man das Reib-Drehmoment zu $M_{dR} = F_{A2}^D \mu$ = 280 Nm. Hieraus erkennt man, daß das Reibmoment etwa 12 mal größer als das Nutzdrehmoment sein kann.

Um eine Hubgeschwindigkeit von v = 20 mm/s erreichen zu können, muß die maximale Drehgeschwindigkeit am Gleit-Schraubtrieb n = 10 U/s bzw. n = 600 U/min betragen. Geht man davon aus, daß bei einem Spannaggregat für $F_A$ = 70.000 N sinnvollerweise der Rotordurchmesser den Wert 160 mm und die Rotorbreite den Wert 500 mm nicht übersteigen sollten, so ergibt sich hierfür beim Einsatz des oben beschriebenen Ansteuergeräts ein maximales Drehmoment von 110 Nm bis zu einer Motordrehzahl von 180 U/min.

Schätzt man das bei einem Reibungskoeffizienten von $\mu$ = 0,2 auch unter Berücksichtigung des beteiligten Axial-Wälzlagers aufzubringende Gesamt-Drehmoment auf $M_{d,ges} \approx$ 320 Nm, so wird ersichtlich, daß das Untersetzungsverhältnis i des Planetengetriebes bei i $\approx$ 1:3 liegen muß. Aus dem sich so ergebenden Untersetzungsverhältnis ergibt sich, daß zur Einstellung einer Hubgeschwindigkeit von v = 20 mm/s im Eilgang - bei allerdings geringem Drehmomentenbedarf - der Motor eine maximale Drehzahl von $n_{max}$ = 1800 U/min erreichen muß. Aus Gründen niedriger Herstellkosten, kleiner Baugröße des Motorrotors und anzustrebender Verschleißfreiheit kommt als Motorbauart nur ein Drehstrommotor infrage.

Der Motor-Fachmann erkennt, daß die Erfüllung beider Forderungen, nämlich einmal nach einem extrem hohen Drehmoment bei kleiner Baugröße und niedriger Drehzahl und zum anderen nach einer in Anbetracht der vorzusehenden Mehrpoligkeit des Stators sehr hohen Drehzahl bei gleichzeitiger Erfüllung der erforderlichen guten Regeldynamik ein hochwertiges Ansteuergerät voraussetzt.

Veränderungen des Untersetzungsverhältnisses i des Planetengetriebes in der einen oder anderen Richtung bei gleichzeitiger Beibehaltung der maximalen Hubgeschwindigkeit bringen kaum eine Erleichterung der Anforderungen an Motor und Ansteuergerät, da bei der hier einzig infrage kommenden Betriebsweise mit der Vergrößerung der Maximaldrehzahl eine Verkleinerung des Maximaldrehmoments - und umgekehrt - einhergeht.

Besonders erwähnt werden muß noch die beim Aufbau der Spannkraft notwendigerweise durchzuführende Betriebsweise:

Die genaue Einstellung einer vorgebenen Spannkraft-Größe kann bei Verwendung eines Gleit-Schraubtriebs wegen der großen Streuung des Reibungskoeffizienten nicht über das Motodrehmoment erfolgen.

Vielmehr muß die Beeinflussung des Motors unter Einbeziehung eines Sensors zur laufenden Erfassung des Spannkraft-Ist-Wertes erfolgen.

Weiterhin kann die Stillsetzung des Spannmotors nicht derart erfolgen, daß die Motordrehzahl bis zum Erreichen der vorgegebenen Spannkraft kontinuierlich bis auf den Wert Null heruntergeregelt wird. Zur Milderung des bei Gleitschraubtrieben auftretenden "Stick-Slip-Effekts" muß vielmehr bis zulezt mit einer bestimmten Mindest-Drehgeschwindigkeit gefahren werden, um dann, bei Erreichen der vorgegebenen Spannkraft, den Motor schlagartig stillzusetzen. Dies erfordert eine hohe Regeldynamik des elektrischen Antriebs.

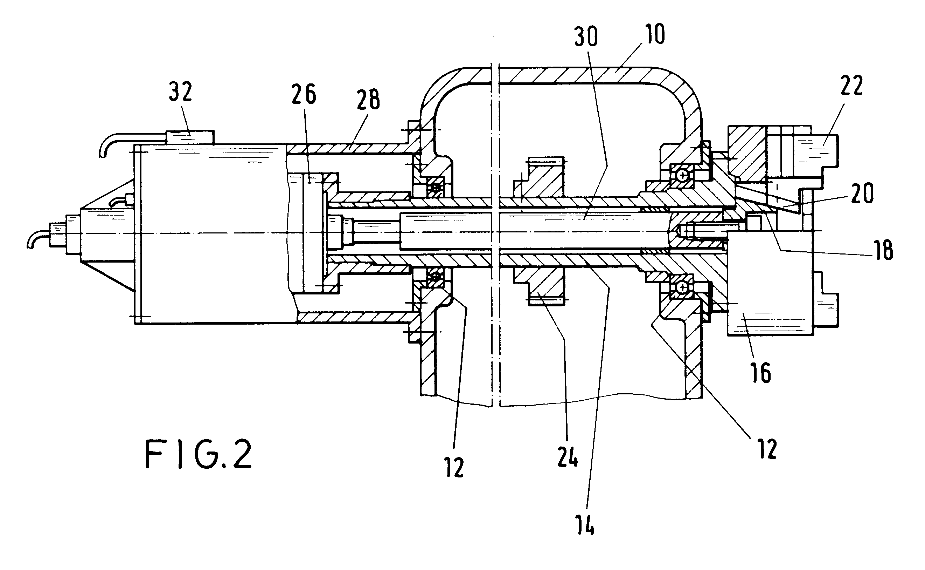

Nach diesen eher theoretischen Erläuterungen wird nun auf die Ausführungsbeispiele in den Figuren 2 bis 7 eingegangen.

Man erkennt in Fig. 2 den Spindelkasten 10 mit der in Wälzlagern 12 gelagerten Spindel 14. Am einen freien Ende der Spindel sitzt ein Spannfutterkörper 16, in dem axial verlagerbar ein Spannkolben 18 aufgenommen ist; dieser betätigt über Keilführungen 20 in an sich bekannter Weise die Spannbacken 22. Der Spindelantrieb erfolgt über ein Zahnrad 24, das zum Beispiel über einen Zahnriemen (nicht gezeigt) mit einem Spindelantriebsmotor (nicht gezeigt, jedoch in Fig. 1 mit "MII" bezeichnet), verbunden ist.

Am anderen freien Ende der Spindel 14 trägt diese den Rotor 26 eines Spannmotors, dessen Stator in einem an den Spindelkasten 10 angeflanschten Gehäuse 28 untergebracht ist. (Motor "MI" in Fig. 1)
Durch die hohl ausgebildete Spindel 14 erstreckt sich ein Zug/-Druckrohr 30, das am futterseitigen Ende mit dem Spannkolben 18 verbunden ist, am spannmotorseitigen Ende mit der Schraube eines Wälzschraubtriebs, dessen Mutter vom Spannmotor relativ zur Spindel 14 verdrehbar ist.

Der Klemmenkasten für die Statorstromversorgung ist mit 32 bezeichnet.

In Fig. 3 erkennt man das Gehäuse 28 mit dem Stator des Spannmotors, umfasend das Joch 40 mit der Wicklung 42. Der als Kurzschlußläufer ausgebildete Rotor umfaßt den Kern 44 mit den Kurzschlußringen 46. Er ist auf einer Hülse 48 festgeklemmt, deren Endflansch 50 eine Stirnverzahnung 52 trägt; diese rotiert vor einem stationären induktiv arbeitenden Geber 128, der pro Drehwinkeleinheit einem Impuls liefert; die Verwendung dieser Impulse wird später erläutert. - Der Endflansch 50 ist mit einem zur Hülse 48 koaxialen Innenrohr 54 verschraubt, das in Wälzlagern 56, 58 abgestützt ist und an seinem freien Ende eine Außenverzahnung 60 aufweist.

Auf das freie Ende der Spindel 14 ist eine Muffe 62 aufgeschraubt, mit der ein Rohrstück 64 verbunden ist; dieses weist eine Innenverzahnung 66 in Höhe der Verzahnung 60 auf. An seinem der Spindel abgekehrten Ende ist eine Buchse 68 angeschraubt, in der die Außenringe der Wälzlager 56, 58 festgelegt sind.

In dem Ringraum zwischen den Verzahnungen 60 und 66 befindet sich ein Planetenträger 70 mit Planetenritzeln 72, welche mit den Verzahnungen 60 und 66 kämmen; der Planetenträger 70 ist mit der Gewindetrieb-Mutter 74 verschraubt und mittels eines Stirnlagers 76 axial an dem Rohrstück 64 abgestützt.

Demgemäß sind mit der Spindel 14 die Muffe 62, das Rohrstück 64 und die Buchse 68 drehfest verbunden. Relativ zu dieser Baugruppe und zu dem stationären Gehäuse 28 drehbar sind die mit dem Läufer 44/46 des Spannmotors verbundenen Komponenten, also die Hülse 48, der Endflansch 50 und das Innenrohr 54. Bei einer Drehung der letztgenannten Baugruppe relativ zur Spindel 14 wird also der Planetenträger 70 einen Drehwinkel durchlaufen, der vom Untersetzungsverhältnis des Planetengetriebes abhängt, gebildet von den Verzahnungen 60, 66 und den Ritzeln 72. Diese Drehung des Planetenträgers wird auf die Mutter 74 übertragen und durch das Gewinde 77 in eine axiale Verlagerung der Triebschraube 78 und der mit ihr verbundenen Komponenten umgesetzt.

Diese Komponenten umfassen auf der der Spindel 14 abgewandten Seite ein Führungsrohr 80, dessen freies Ende über ein Wälzlager 82 mit einem Schlitten 84 derart gekuppelt ist, daß der Schlitten - der mittels eines eingeschraubten Nokkens 86, welcher in einem Langloch 88 des Gehäuseansatzes 90 läuft, gegen Drehung gesichert ist - von der Triebschraube 78 mitgeschleppt wird. Der Schlitten 84 trägt einen Meßkopf 92, auf den später eingegangen wird.

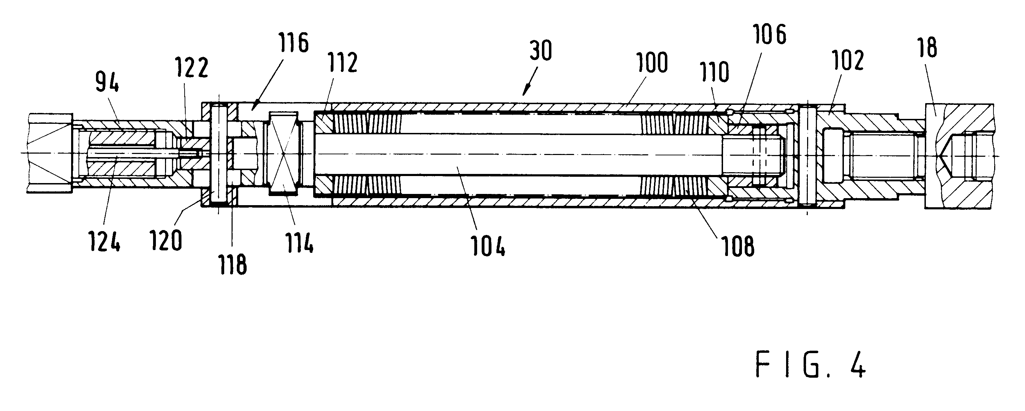

Auf der der Spindel 14 zugekehrten Seite der Triebschraube 78 ist diese dreh- und axialfest mit dem rohrförmigen Anschlußstück 94 zum Zug-/Druckrohr 30 verbunden. Dessen Aufbau ist in Fig. 4 dargestellt, auf die nachstehend eingegangen wird.

Das Zug-/Druckrohr 30 umfaßt ein Außenrohr 100, dreh- und axialfest verbunden mit einer Anschlagmuffe 102, in die koaxial der Spannkolben 18 eingeschraubt ist. In dem Außenrohr 100 befindet sich die Stange 104, an deren futterseitigem Ende sich die Mitnehmerbuchse 106 befindet; zwischen Außenrohr und Stange sind Tellerfederpakete 108 angeordnet. Sie stützen sich futterseitig über einen Druckring 110 an der Muffe 102 ab, der jedoch von der Mitnehmerbuchse 106 in Richtung Spannmotor unter Kompression der Tellerfedern verlagert werden kann, wenn die Stange 104 aus dem Außenrohr (nach links in Fig. 4) gezogen wird.

Auf der dem Futter agbewandten Seite stützen sich die Tellerfederpakete 108 über einen zweiten Druckring 112 an einer Schulter des Außenrohrs 100 ab. Auch dieser Druckring ist jedoch in das Außenrohr 100 hinein verlagerbar, wobei die Tellerfedern komprimiert werden, wenn die Stange 104 in das Außenrohr 100 hineingeschoben wird (nach rechts in Fig. 4).

Das Anschlußstück 94 trägt einen Keil 114, der in Axialnuten 116 des Außenrohrs 100 greift und so Anschlußstück 94 und Außenrohr 100 miteinander drehfest verbindet, jedoch eine relative Verlagerung beider in beiden Axialrichtungen, jeweils unter Kompression der Tellerfedern, wie oben erläutert, zuläßt.

Durch Langlöcher 118 des Anschlußstücks 94 erstreckt sich radial ein Stift 120, der drehfest mit einem Gleitstück 122 verbunden ist, das in einer Bohrung des Anschlußstücks 94 axialverlagerbar geführt ist. In das Gleitstück ist ein Ende einer Sensorstange 124 eingeschraubt, die sich durch die Triebschraube 78 und das Führungsrohr 80 hindurch bis jenseits des Wälzlagers 82 erstreckt und dort einen Sensorkopf 126 trägt. Bei einer relativen axialen Verlagerung von Außenrohr 100 und Stange 104 erfolgt demgemäß auch eine relative Verlagerung des Sensorkopfes 126 zu dem Meßkopf 92. Sensorkopf 126 und Meßkopf 92 wirken derart zusammen, daß in Abhängigkeit von ihrem gegenseitigen Abstand im Meßkopf ein elektrisches Signal (analog oder digital) erzeugt wird, das für diesen Abstand repräsentativ ist und damit repräsentativ für das Maß der Kompression der Tellerfederpakete 108, die als Spannkraftspeicher dienen.

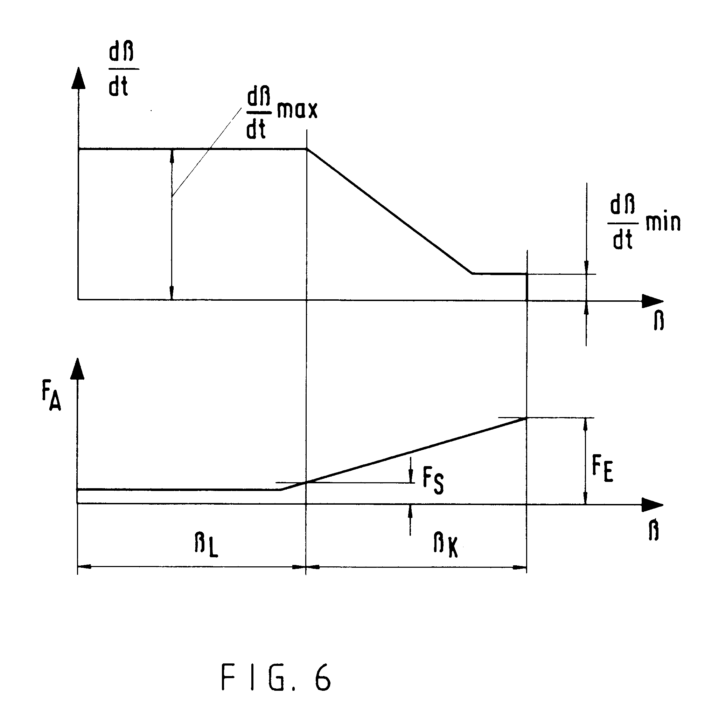

Anhand der Fig. 1 und 6 wird nun das Zusammenwirken der insoweit beschriebenen Ausführungsform mit dem Ansteuergerät erläutert; Fig. 1 wurde oben bereits erörtert.

Aufgrund der Tatsache, daß der Gleitschraubtrieb in sogenannten "Stick-Slip"-Modus arbeitet, wird der Regelalgorithmus gemäß Fig. 6 ausgelegt. Die untere Kurve zeigt den Verlauf des Ausgangssignals vom Sensor 92/126 in Abhängigkeit vom Drehwinkel des Spannmotorrotors, der mit $\beta$ bezeichnet ist. Während des Leerhubes $\beta_L$ wird nur eine sehr geringe Kraft entsprechend der Reibung im Futter gemessen. Sobald die Futterbacken auf das Werkstück auftreffen, steigt die Kraft an, und sobald ein vorbestimmter Wert $F_S$ erreicht ist, - der nur um eine gewisse Sicherheitsmarge oberhalb des Kraftwertes bei $\beta_L$ liegt - wird die Drehgeschwindigkeit $\frac{d\beta}{dt}$ (oberer Teil des Diagramms Fig. 6) z.B. linear, wie dargestellt, herabgesetzt, während zugleich die Spannkraft $F_A$ ansteigt. Die Drehgeschwindigkeit darf jedoch einen Mindestwert $\frac{d\beta}{dt}$ min nicht unterschreiten, damit stets der "Slip"-Betrieb aufrechterhalten bleibt. Erst wenn ein vorgeschriebener Spankraftwert $F_E$ erreicht ist, wird die Drehgeschwindigkeit des Motors abrupt auf den Wert Null heruntergeführt.

Nachdem damit der Spannvorgang beendet ist, kann auf Motor MII zwecks Durchführung der Bearbeitungsgänge umgeschaltet werden. Die hierfür nötigen Befehle werden in üblicher Weise von der CNC-Steuerung geliefert. Nach Ablauf des Bearbeitungsprogramms werden die Schalter wieder umgelegt, und zum Ausspannen des Werkstücks laufen die Vorgänge sinngemäß rückwärts ab.

Für den Fall, daß z.B. an einer Bohr-Fräsmaschine das Spannmittel zur Aufnahme von auswechselbaren Werkzeugen mit stets gleichen Schaftdurchmessern dient, kann auf einen Sensor zur Ermittlung des IST-Wertes der Spannkraft verzichtet werden. Da sich hier beim Spannvorgang - ausgehend von einer bestimmten Winkelposition des Spannmotor-Rotors im geöffneten Zustand des Spannmittels - eine vorbestimmte Spannkraft mit einer davon abgeleiteten Verformung einer Spannkraftspeicher-Feder nach dem Zurücklegen eines zugehörigen konstanten Drehwinkels einstellt, kann die Steuerung des Spannmotors allein nach dem gemessenen Drehwinkel-IST-Wert erfolgen.

Es ist anzumerken, daß der Leistungsbedarf für einen Arbeitsspindelantrieb einer Drehmaschine und für ihren Spannfutterantrieb mindestens in etwa vergleichbare Größe haben, so daß die Dimensionierung der Endstufe für beide paßt. Es ist noch darauf hinzuweisen, daß anstelle des Spannfutterantriebs, oder alternierend mit diesem, auch der Antrieb für die Reitstockpinole mit dem Hauptspindelantrieb-Ansteuergerät betätigbar ist. Die Übertragung der Erfindung auf andere Typen von Maschinen, z.B. auch zum Spannen von Werkzeugen, ergibt sich für den Fachmann aus den vorstehenden Ausführungen ohne weiteres.

Die Einschaltdauer des Spannantriebmotors liegt im allgemeinen höchstens bei 2 %, wobei die Maximalleistung nur während eines Bruchteils dieser Zeit aufzubringen ist. Der Motor kann also sehr klein ausgeführt werden, ohne daß die Gefahr thermischer Überlastung besteht. Dagegen ist der Spindelantrieb für eine Einschaltdauer von 100 % auszulegen, so daß der Motor MII wesentlich größer als der Motor MI sein wird. Dies läßt sich jedoch durch die dem Regler aufgeschalteten unterschiedlichen Parameter berücksichtigen, ebenso wie die daraus resultierenden unterschiedlichen Regelalgorithmen.

Würde die Spindel 14 bei Abschaltung ihres Antriebsmotors und Einschalten des Spannmotors nicht gebremst, so könnte der Spannmotor die Spindel drehen, anstatt die Triebschraube zu verlagern, oder beides tun. Man kann jedoch davon ausgehen, daß der Spindelantriebsmotor eine Bremse aufweist, die ihn bei ausgeschaltetem Spindelantrieb blockiert. Es besteht jedoch noch immer die Gefahr, daß bei einem plötzlich auf die umlaufende Spindel wirkenden Bremsmoment der Rotor des Spannmotors zumindest kurzzeitig mit der vorherigen Drehzahl weiterläuft und dabei - je nachdem - die Spannkraft unzulässig hoch macht oder sogar, im anderen Falle, das Werkstück ausspannt. Aus diesem Grund ist Vorsorge getroffen, den Rotor bei ausgeschaltetem Spannmotor mechanisch mit der Spindel zu kuppeln.

Zu diesem Zweck ist der Statorkern 40 des Spannmotors axial gegenüber dem Rotorkern in Richtung auf die Spindel verlängert, und im Stirnbereich des Statorkerns sitzt auf dem Rotor ein Kupplungsring 130 mit einer Stirnverzahnung in Ausfluchtung mit einer Gegenverzahnung 132 auf der Buchse 68. Der Kupplungsring ist auf Bolzen 134 montiert, die von Federn 136 in Richtung Verzahnungseingriff vorgespannt sind.

Das Ansteuergerät in seiner bevorzugten Ausführungsform ermöglicht die getrennte Aufschaltung der felderzeugenden Stromkomponente und der drehmomenterzeugenden Stromkomponente auf die Statorwicklung 42. Der Regelalgorithmus wird demgemäß so ausgelegt, daß immer zuerst die felderzeugende Komponente eingeschaltet wird, wodurch der Kupplungsring - als Anker des dann als Magnet wirkenden Statorkerns - aus der Verzahnung gelöst wird, und dann erst das Drehmoment erzeugt wird. Beim Ausschalten geht man natürlich umgekehrt vor.

Die parallele Erfassung von Drehwinkel, Spannkraft und Bremsmoment (über die Betriebsparameter des Ansteuergeräts) ermöglicht, verschiedene Überwachungsfunktionen vorzusehen. So macht sich das Spiel zwischen Triebmutter und Triebschraube bei Drehrichtungsumkehr durch einen starken Abfall des Bremsmoments bemerkbar, und der zugeordnete Drehwinkel ist dann ein Maß für die "Lose" in dem Gleitgewindetrieb und damit ein Maß für den Verschleiß, so daß z.B. bei Überschreiten eines vorgegebenen Grenzwerts ein Warnsignal ausgelöst werden kann.

Ferner ist z.B. die Höhe des Bremsmoments während des Leerhubs $\beta_L$ ein Maß für den Schmierzustand des Gewindetriebs, und auch hier kann bei Überschreiten eines vorgegebenen Grenzwertes ein Warnsignal erzeugt werden.

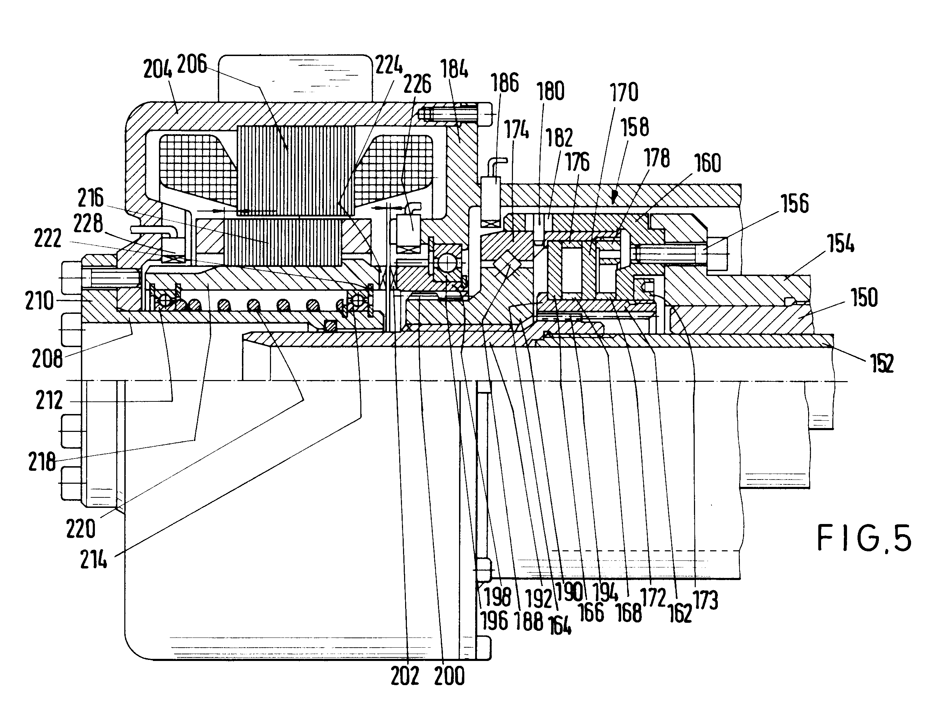

Bei der Ausführungsform nach Fig. 5 ist ebenfalls ein Gleitgewindetrieb vorgesehen, bei dem jedoch die eingangs erwähnte reibungsmindernde Beschichtung vorgesehen ist und deshalb die Gewindegänge auf einem größeren Durchmesser liegen dürfen, so daß die Spindel hohl ausgebildet werden kann. Der Spannmotor ist bezüglich des Spindelumlaufs stationär and nur für den Spann- bzw. Entspannvorgang wird sein Rotor mit der Spindel gekuppelt.

Der generelle Aufbau des Spindelstocks wird nicht noch einmal beschrieben; hier kann auf Fig. 2 verwiesen werden.

Innerhalb der Spindel 150 befindet sich das Zug-Druck-Rohr 152, das mit der Spindel umläuft und zwecks Betätigung von Spannbacken axial relativ zur Spindel verlagerbar ist. Mit der Spindel ist ein Flansch 154 verschraubt, der über Schrauben 156 eine Kraftspeicher-Baugruppe 158 trägt.

Diese Baugruppe umfaßt eine Traghülse 160, in der ein Innenring 162 sitzt. Am Endflansch 164 des Innenrings stützt sich eine erste Tellerfeder 166 axial ab; auf seiner anderen Seite wird er von einem ersten Zwischenring 168 eingeklemmt. Auf dessen anderer Seite folgt eine zweite Tellerfeder 170, geklemmt von einem zweiten Zwischenring 172. Zwischen diesem und einer Ringmutter 173, aufgeschraubt auf den Innenring 162, ist die Traghülse festgelegt. Die radial äußeren Umfänge der Tellerfedern 166, 170 sind an einem Außenring 174 mittels eines weiteren Klemmrings 176 und einer Ringschraube 178, eingeschraubt in den Außenring 174, festgelegt. Vom Außenring 174 erstrecken sich Zapfen 180 in einen Schlitz 182 der Traghülse 160, so daß beide drehfest, jedoch axialverschieblich miteinander gekuppelt sind.

Die jeweilige Axialposition des Außenrings 174 relativ zur Spindel und damit relativ zum Spindelkasten 184 wird mittels eines Sensors 186 erfaßt, eingebaut in den Spindelkasten.

Der Außenring 174 ist ferner über ein Kreuzrollenlager 188 mit der Mutter 190 eines Gleitgewindetriebes verbunden, dessen hohl ausgebildete Schraube 192 mit dem Zug-Druck-Rohr 152 verschraubt ist. Axialkeilnuten 194 auf der Außenseite der Schraube 192 kuppeln diese drehfest, jedoch axialverschieblich mit dem Innenring 162 der Kraftspeicherbaugruppe.

Bei Drehung der Mutter 190 relativ zu der -- bei stillstehender Spindel ebenfalls nichtumlaufenden -- Schraube 192 wird demgemäß das Zug-Druck-Rohr 152 axial verlagert, bis es, etwa durch Auflaufen von Spannbacken auf ein Werkstück, stark abgebremst wird; von dann an führt weitere Drehung der Mutter dazu, daß sie sich an der Schraube 192 axial entlang schraubt unter Axialverlagerung des Außenrings 174, wobei die Tellerfedern 166, 170 elastisch deformiert werden und die Spannkraft speichern.

Die zum Spannen und Entspannen erforderlichen Drehbewegungen werden auf die Mutter 190 in folgender Weise übertragen:
Im Spindelkasten 184 ist mittels Kugellager 196 ein Kupplungsring 198 gelagert, der über Keilnuten 200 drehfest, jedoch axialverschieblich mit der Mutter 190 gekuppelt ist. Der Kupplungsring 198 trägt eine Stirnverzahnung 202.

An den Spindelkasten ist ein Motorgehäuse 204 angeflanscht, das den Stator 206 eines Spannantriebsmotors aufnimmt und mit dem eine Muffe 208 verschraubt ist, die sich von einem Endflansch 210 einwärts erstreckt. Auf ihr ist mittels Kugellagern 212, 214 der Rotor 216 des Motors gelagert, der fest mit dem Kupplungsrohr 218 verbunden ist. Das Kugellager 212 sitzt verschieblich auf der Muffe 208, und das Kugellager 214 sitzt verschieblich im Kupplungsrohr 218. Zwischen den Lagern 212, 214 ist eine Rückstellfeder 220 eingespannt, die während des Spindelumlaufs, also bei stromlosem Spannantriebsmotor, den Rotor des letzteren in der dargestellten Axialposition hält, definiert durch den Anschlagring 222.

Das Kupplungsrohr 218 trägt auf seiner inneren Stirnfläche eine Stirnverzahnung 224, die mit der Stirnverzahnung 202 des Kupplungsringes durch Axialverlagerung des Kupplungsrohres 218 unter Kompression der Feder 220 in Eingriff bringbar ist. Dies geschieht durch Einschalten des Motorstromes, wodurch der Rotor in den Stator hineingezogen wird. Beide miteinander kuppelnden Teile tragen Umfangszähne, die im Zusammenwirken mit Sensoren 226 bzw. 228 die Erkennung der Winkellage gestatten, so daß die Stirnverzahnungen beim Einkuppeln nicht beschädigt werden.

Die Gesamtanordnung ist zentralsymmetrisch bezüglich der Spindelachse aufgebaut, so daß nur die obere Hälfte im Schnitt dargestellt zu werden brauchte.

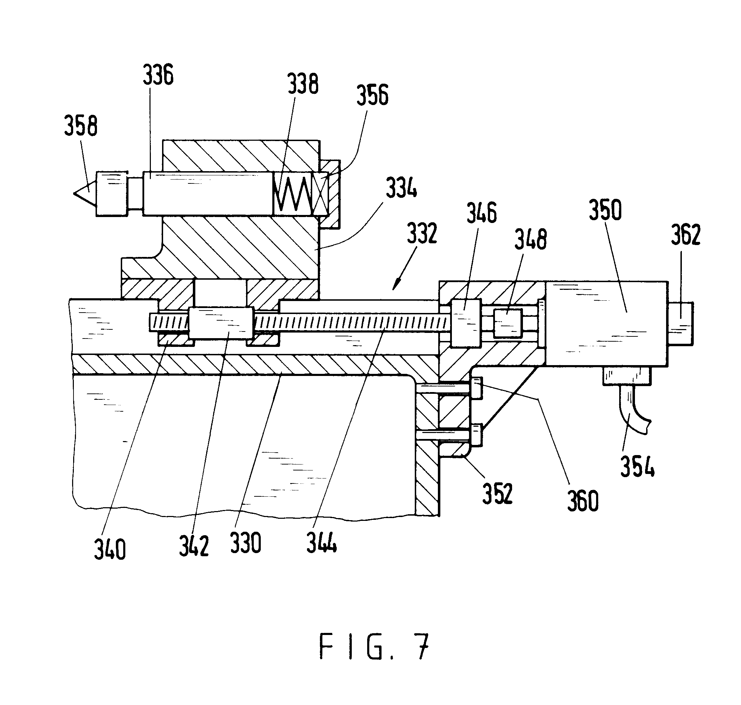

Die Fig. 7 zeigt schematisch im Axialteilschnitt den Reitstockbereich einer Drehmaschine. Das Maschinenbett 330 trägt in üblicher Weise die Geradführung 332 für den Reitstockschlitten 334 mit Pinole 336, deren dem Spindelstock abgewandtes Ende sich an einer Kompressionsfederanordnung 338 abstützt. Die Verlagerung des Reitstockschlittens erfolgt mittels eines Wälzgewindetriebs, dessen Mutter 342 bei 340 gehalten ist und mit der zum Umlauf antreibbaren Spindel 344 zusammenwirkt. Ein Axiallager 346 nimmt die Reaktionskräfte auf. Über eine Kupplung 348 treibt ein Servomotor 350, mittels Haltewinkel 352 am Bett 330 befestigt (Schrauben 360), die Spindel 344 zum Umlauf an und verlagert dabei den Reitstockschlitten 334. Der Motor ist über ein Mehrleiterkabel 354 an ein Ansteuergerät angeschlossen, vorzugsweise dasselbe, das auch dem Spannantrieb und dem Spindelantrieb zugeordnet ist. Neben dem Ausgangssignal eines Federkraftsensors 356, das die von der Pinolenspitze 358 ausgeübte Andruckkraft repräsentiert, ist noch ein Wegsensor 362 vorgesehen. Dies ermöglicht, wahlweise eine vorgegebene Spannkarft oder einen vorgegebenen Verstellweg zu erreichen. Es versteht sich, daß nach diesem Schema noch weitere Servoantriebe von demselben Ansteuergerät bedient werden können, vorausgesetzt, daß sie nicht gleichzeitig zu steuern sind. Ebenso kann anstelle des Wälzgewindetriebs 342/344 ein reibungsmindernd beschichteter Gleitgewindetrieb vorgesehen werden.

**Patentansprüche**

1. Werkzeugmaschine mit einer zum Umlauf antreibbaren Arbeitsspindel und dieser zugeordnetem elektrischen Spann-Antrieb, umfassend einen Drehstrommotor sowie ein Ansteuergerät für den Motor, gekennzeichnet durch die Kombination der Merkmale:
   a) Die Werkzeugmaschine weist noch mindestens einen weiteren Drehstrommotor als Antrieb für ein Maschinenaggregat auf, das nur alternierend mit dem Spannantrieb betrieben wird,
   b) für die Motoren ist ein stetig regelndes Ansteuergerät vorgesehen, das nach dem Prinzip der Frequenzumrichtung arbeitet,
   c) zum alternierenden Ansteuern der Motoren sind die leistungsseitigen Ausgänge des Ansteuergeräts umschaltbar, wobei zugleich auch ein alternierender Zugriff auf die für den jeweils anzusteuernden Motor maßgeblichen Motorparameter und/oder Regelalgorithmen sowie die zugeordneten Motor-ISTwerte und Motor-SOLLwerte erfolgt.

2. Werkzeugmaschine nach Anspruch 1, dadurch gekennzeichnet, daß der Ausgang des Ansteuergeräts einen Drehstrom als Summe einer magnetisierenden Stromkomponente und einer drehmomentbildenden Stromkomponente führt, wobei beide Komponenten von einem geräteinternen Rechner in stetiger Anpassung an den Motor-Betriebszustand veränderbar sind.

3. Werkzeugmaschine nach Anspruch 1 und 2, dadurch gekennzeichnet, daß die alternierende Umschaltung der leistungsseitigen Ausgänge und/oder der alternierende Zugriff auf die Motorparameter, Regelalgorithmen, Motor-ISTwerte und Motor-SOLLwerte von einem Rechner einer übergeordneten CNC-Steuerung durchgeführt wird.

4. Werkzeugmaschine nach Anspruch 1 und 2, dadurch gekennzeichnet, daß die alternierende Umschaltung der leistungsseitigen Ausgänge und/oder der alternierende Zugriff aud die Motorparameter, Regelagorithmen, Motor-ISTwerte und Motor-SOLLwerte von dem internen Rechner des Ansteuergeräts durchgeführt wird.

5. Werkzeugmaschine nach Anspruch 3 oder 4, bei der der weitere Motor der Antriebsmotor der Arbeitsspindel der Maschine ist.

6. Werkzeugmaschine nach einem der Ansprüche 3 bis 5, dadurch gekennzeichnet, daß ein weiterer Motor der Antriebsmotor eines zusätzlich an der Maschine vorhandenen Spannaggregats ist.

7. Werkzeugmaschine nach einem der Ansprüche 1 bis 4 und 6 in Form einer Drehmaschine, jedoch derart abgewandelt, daß die Umschaltung des Ansteuergeräts nacheinander auf einen Spannantrieb für die Betätigung eines Spannfutters und einen Spannantrieb für die Erzeugung der Spannbewegung einer Reitstock-Pinole erfolgt.

8. Werkzeugmaschine nach Anspruch 7, dadurch gekennzeichnet, daß der Spannantrieb für die Erzeugung der Spannbewegung einer ReitstockPinole primär die Verstellung eines Reitstock-Schlittens in einer zur Arbeitsspindel parallelen Richtung und damit sekundär auch die Verstellung der Reitstock-Pinole bewirkt, wobei die Spannkraft der Pinole über eine Feder auf den Reitstock übertragen wird.

9. Werkzeugmaschine nach einem der Ansprüche 1 bis 8, dadurch gekennzeichnet, daß der Spannantrieb-Drehstrommotor einen bezüglich des Spindelumlaufs stationären Stator aufweist.

10. Werkzeugmaschine nach Anspruch 9, dadurch gekennzeichnet, daß der Rotor des Spannantrieb-Drehstrommotors koaxial zur Arbeitsspindel mit dieser umlaufend angeordnet ist.

11. Werkzeugmaschine nach Anspruch 9 oder 10, gekennzeichnet durch einen Gleitschraubtrieb zur Umsetzung der Motordrehbewegung in eine translatorische axiale Spannbewegung.

12. Werkzeugmaschine nach Anspruch 11, dadurch gekennzeichnet, daß in den Kraftfluß der vom Spannantrieb erzeugten Spannkraft ein als Feder ausgebildeter Spannkraftspeicher eingeschaltet ist.

13. Werkzeugmaschine nach Anspruch 12, dadurch gekennzeichnet, daß ein Sensor zur Erfassung der erzeugten Spannkraft vorgesehen und daß eine vorgebbare Spannkraft durch Regelung des Motor-Drehwinkels in Abhängigkeit vom Sensor-IST-Signal einstellbar ist.

14. Werkzeugmaschine nach einem der Ansprüche 11 bis 13, dadurch gekennzeichnet, daß die Arbeitsspindel relativ zum Spindelgehäuse blockierbar ist.

15. Betriebsverfahren für eine Vorrichtung nach Anspruch 2 und Anspruch 11, dadurch gekennzeichnet,
    - daß für die Durchführung einer aus Leerhub ($\beta_L$) mit anschließendem Krafthub ($\beta_K$) zusammengesetzten Spannbewegung zum Aufbau einer von außen vorgebbaren Spannkraft $F_E$ der Sollwert $\frac{d\beta}{dt}$ für die Drehgeschwindigkeit des Spannmotors derart vorgegeben wird,
    - daß $\frac{d\beta}{dt}$ während des Leerhubes ($\beta_L$) einen definierten konstanten Wert hat,
    - daß $\frac{d\beta}{dt}$ während des Krafthubes ($\beta_K$) stetig von dem konstanten Wert auf einen definierten Restwert ($\frac{d\beta}{dt}$ min) abgesenkt wird und
    - daß $\frac{d\beta}{dt}$ bei Erreichen der Soll-Spannkraft ($F_E$) auf den Wert Null gebracht wird, wobei der Beginn des Krafthubs ($\beta_K$) dadurch definiert ist, daß die Spannkraft (F) einen definierten Schwellenwert ($F_S$) überschreitet und wobei die Restgeschwindigkeit ($\frac{d\beta}{dt}$ min) oberhalb der "Stick-Slip"-Drehzahl des Gleitschraubtriebs liegt.

16. Betriebsverfahren nach Anspruch 15 mit Benutzung einer Vorrichtung nach Anspruch 13, dadurch gekennzeichnet, daß eine vorgebbare Spannkraft eingestellt werden kann, indem die Führung der Drehgeschwin digkeit des Spannmotors während des Krafthubes ($\beta_K$) in Abhängigkeit von dem stetig erfaßten Spannkraft-Istwert erfolgt.

17. Werkzeugmaschine nach Anspruch 9 oder 11, dadurch gekennzeichnet, daß auch der Rotor des Spannantriebs stationär angeordnet ist und eine schaltbare Kupplung zwischen ihm und einem Spannaggregat vorgesehen ist.

18. Werkzeugmaschine nach Anspruch 17, dadurch gekennzeichnet, daß ein Schaltglied der Kupplung durch den Magnetisierungsfluß des Spannmotors verlagerbar ist.

19. Werkzeugmaschine nach Anspruch 11 oder 17, dadurch gekennzeichnet, daß das Spannaggregat einen Gleitschraubtrieb mit zusammenwirkendem Spindelelement und Mutterelementen umfaßt und daß mindestens eines der Elemente mindestens im Bereich der im Eingriff stehenden Gewindegänge mit einer Hartstoffbeschichtung versehen ist.

20. Werkzeugmaschine nach Anspruch 19, dadurch gekennzeichnet, daß die Hartstoffbeschichtung aus der Gasphase chemisch abgeschieden ist.

21. Werkzeugmaschine nach Anspruch 20, dadurch gekennzeichnet, daß die Hartstoffbeschichtung aus diamantartigem Kohlenstoff besteht.

## Claims

1. A machine tool comprising a work spindle drivable for rotation and an electrical chucking or gripping drive associated therewith, comprising a three-phase motor and a control device for the motor, characterised by the combination of the features:
    a) the machine tool also comprises at least one other three-phase motor as the drive for a machine unit which is operated only alternately with the chucking or gripping drive,
    b) a control device which provides a continuous control and which operates on the principle of frequency inversion, is provided for the motors,
    c) for alternate control of the motors, the control device outputs on the power side can be selectively switched, while there is simultaneously also alternate action on the motor parameters and/or control algorithms governing whichever motor is to be controlled, and the associated motor actual values and motor set-values.

2. A machine tool according to claim 1, characterised in that the control device output carries a three-phase current in the form of the sum of a magnetising current component and the torque-forming current component, the two components being variable by an internal computer of the control device for continuous adaptation to the state of operation of the motor.

3. A machine tool according to claims 1 and 2, characterised in that the alternate selective switching of the outputs on the power side and/or the alternate action on the motor parameters, control algorithms, motor actual values and motor set-values is carried out by a computer of a master CNC control system.

4. A machine tool according to claims 1 and 2, characterised in that the alternate selective switching of the outputs on the power side and/or the alternate action on the motor parameters, control algorithms, motor actual values and motor set-values is carried out by the internal computer of the control device.

5. A machine tool according to claim 3 or 4, in which the other motor is the drive motor for the machine work spindle.

6. A machine tool according to any one of claims 3 to 5, characterised in that one other motor is the drive motor of an additional chucking or gripping unit provided on the machine.

7. A machine tool according to any one of claims 1 to 4 and 6 in the form of a lathe, but so modified that the selective switching of the control device is effected successively to a chucking drive to actuate a chuck and to a gripping drive to generate the gripping movement of a tailstock spindle.

8. A machine tool according to claim 7, characterised in that the chucking or gripping drive to generate the chucking or gripping movement of a tailstock spindle primarily effects the movement of a tailstock slide in a direction parallel to the work spindle and hence, secondarily, also the movement of the tailstock spindle, the chucking or gripping force of the tailstock spindle being transmitted to the tailstock via a spring.

9. A machine tool according to any one of claims 1 to 8, characterised in that the chucking or gripping drive three-phase motor has a stator which is stationary in respect of the spindle rotation.

10. A machine tool according to claim 9, characterised in that the chucking or gripping drive three-phase motor rotor is disposed so as to rotate with and coaxially to the work spindle.

11. A machine tool according to claim 9 or 10, characterised by a sliding screw drive to convert the motor rotation into a translational axial chucking or gripping movement.

12. A machine tool according to claim 11, characterised in that a chucking or gripping force storage means constructed as a spring is incorporated in the line of the force generated by the chucking or gripping drive.

13. A machine tool according to claim 12, characterised in that a sensor is provided to detect the chucking or gripping force generated and in that a pre-settable chucking or gripping force can be set by controlling the angle of rotation of the motor in dependence on the actual signal from the sensor.

14. A machine tool according to any one of claims 11 to 13, characterised in that the work spindle is blockable relatively to the spindle housing.

15. A method of operating a device according to claim 2 and claim 11 characterised in that:
   - to perform a chucking or gripping movement composed of an idle stroke ($\beta_L$) followed by a force stroke ($\beta_K$), in order to build up an externally pre-settable chucking or gripping force $F_E$, the set-value $d\beta/dt$ for the speed of rotation of the chucking or gripping motor is so pre-set:
   - that $d\beta/dt$ has a defined constant value during the idle stroke ($\beta_L$),
   - that $d\beta/dt$ is continuously lowered during the force stroke ($\beta_K$) from the constant value to a defined residual value ($d\beta/dt$ min) and
   - that $d\beta/dt$ is brought to zero when the set-value of the chucking or gripping force ($F_E$) is reached, the start of the force stroke ($\beta_K$) being defined by the chucking or gripping force (F) exceeding a defined threshold value ($F_S$), the residual speed ($d\beta/dt$ min) being above the stick-slip speed of the sliding screw drive.

16. A method of operating according to claim 15, using a device according to claim 13, characterised in that a pre-settable chucking or gripping force can be set by controlling the speed of rotation of the chucking or gripping motor during the force stroke ($\beta_K$) in dependence on the continuously detected actual value of the chucking or gripping force.

17. A machine tool according to claim 9 or 11, characterised in that the chucking or gripping drive rotor is also stationary and a switchable coupling is provided between it and a chucking or gripping unit.

18. A machine tool according to claim 17, characterised in that a switching element of the coupling is movable by the chucking or gripping motor magnetization flux.

19. A machine tool according to claim 11 or 17, characterised in that the chucking or gripping unit comprises a sliding screw drive with a co-operating spindle element and nut elements and in that at least one of the elements is provided with a hard-material coating at least in the region of the meshing screwthreads.

20. A machine tool according to claim 19, characterised in that the hard-material coating is deposited chemically from the gas phase.

21. A machine tool according to claim 20, characterised in that the hard-material coating consists of diamond-like carbon.

**Revendications**

1. Machine-outil comportant un arbre de travail pouvant être entraîné en rotation ainsi qu'un dispositif de commande de serrage électrique associé à cet arbre et comportant un moteur triphasé ainsi qu'un dispositif de commande pour ce moteur, caractérisée en ce qu'elle présente la combinaison des caractéristiques suivantes :
   a) elle comporte en outre au moins un autre moteur triphasé destiné à entraîner un ensemble de machine qui ne fonctionne qu'en alternance avec le dispositif de commande de serrage,
   b) il est prévu pour les moteurs un dispositif de commande à régulation permanente qui fonctionne selon le principe de la conversion de fréquence,
   c) pour la commande alternée des moteurs les sorties de puissance du dispositif de commande sont commutables, tandis que simultanément il se produit un accès alterné aux paramètres de moteur et/ou aux algorithmes de régulation ainsi qu'aux valeurs réelles et de consigne de moteur, représentatifs du moteur devant respectivement être commandé.

2. Machine-outil suivant la revendication 1, caractérisée en ce que la sortie du dispositif de commande transmet un courant triphasé formé par la somme d'une composante d'intensité d'aimantation et d'une composante d'intensité engendrant un couple de rotation, les deux composantes pouvant être modifiées par un calculateur interne en s'adaptant constamment à l'état de fonctionnement du moteur.

3. Machine-outil suivant les revendications 1 et 2, caractérisée en ce que la commutation réalisant l'alternance des sorties de puissance et/ou l'accès alterné aux paramètres de moteur, aux algorithmes de régulation et aux valeurs réelles et de consigne de moteur, sont réalisés par un calculateur d'un dispositif - maître de commande numérique.

4. Machine-outil suivant les revendications 1 et 2, caractérisée en ce que la commutation réalisant l'alternance des sorties de puissance et/ou l'accès alterné aux paramètres de moteur, aux algorithmes de régulation et aux valeurs réelles et de consigne de moteur, sont réalisés par un calculateur se trouvant dans le dispositif de commande.

5. Machine-outil suivant la revendication 3 ou 4, dans laquelle le moteur supplémentaire et le moteur d'entraînement de l'arbre de travail de la machine.

6. Machine-outil suivant l'une des revendications 3 à 5, caractérisée en ce qu'un moteur supplémentaire est le moteur d'entraînement d'un dispositif supplémentaire de serrage prévu également sur la machine.

7. Machine-outil suivant l'une des revendications 1 à 4 et 6, se présentant sous la forme d'un tour qui est cepedant modifié de telle façon que la commutation du dispositif de commande soit réalisé successivement sur un dispositif de commande de serrage destiné à actionner un mandrin de serrage et sur un dispositif de commande de serrage destiné à provoquer le mouvement de serrage d'un canon de contre-pointe.

8. Machine-outil suivant la revendication 7, caractérisée en ce que le dispositif de commande de serrage destiné à engendrer le mouvement de serrage d'un canon de contre-pointe effectue d'abord le mouvement de réglage d'un chariot de contre-pointe dans une direction parallèle à l'arbre de travail, puis de ce fait également le mouvement de réglage du canon de contre-pointe, la force de serrage du canon étant transmise à la contre-pointe par l'intermédiaire d'un ressort.

9. Machine-outil suivant l'une des revendications 1 à 8, caractérisée en ce que le moteur triphasé du dispositif de commande de serrage présente un stator qui est fixe par rapport à la rotation de l'arbre.

10. Machine-outil suivant la revendication 9, caractérisée en ce que le rotor du moteur triphasé de commande de serrage est disposé coaxialement à l'arbre de travail et solidaire en rotation de celui-ci.

11. Machine-outil suivant la revendication 9 ou 10, caractérisée en ce qu'elle comprend un dispositif d'entraînement à vis de glissement destiné à transformer le mouvement de rotation du moteur en un mouvement de serrage axial de translation.

12. Machine-outil suivant la revendication 11, caractérisée en ce qu un dispositif d'accumulation de force de serrage, réalisé sous la forme d'un ressort, est inséré dans la chaîne dynamique de la force de serrage engendrée par le dispositif de commande de serrage.

13. Machine-outil suivant la revendication 12, caractérisée en ce qu'il est prévu un capteur pour mesurer la force de serrage engendrée et ce qu'une force de serrage prédéterminée peut être fixée par régulation de l'angle de rotation du moteur en fonction d'un signal réel du capteur.

14. Machine-outil suivant l'une des revendications 11 à 13, caractérisée en ce que l'arbre de travail peut être bloqué par rapport au carter de l'arbre.

15. Procédé de mise en oeuvre d'un dispositif suivant les revendications 2 et 11, caractérisé en ce, que pour exécuter un mouvement de serrage composé d'une course à vide ($\beta_L$) et d'une course dynamique consécutive ($\beta_K$), mouvement qui est destiné à engendrer une force de serrage $F_E$ pouvant être déterminée de l'extérieur, la valeur de consigne $\frac{d\beta}{dt}$ de de la vitesse de rotation du moteur de serrage est prédéterminée de telle façon que,
   - $\frac{d\beta}{dt}$ présente au cours de la course à vide ($\beta_L$) une valeur constante définie ,
   - $\frac{d\beta}{dt}$ est réduite constamment au cours de la course dynamique ($\beta_K$) à partir d'une valeur constante jusqu'à une valeur résiduelle prédéterminée ($\frac{d\beta}{dt}$ min) et
   - $\frac{d\beta}{dt}$ est portée à la valeur 0 lorsque la force de serrage de consigne ($F_E$) est atteinte, le début de la course dynamique ($\beta_K$) étant définie par le fait que la force de serrage (F) dépasse une valeur de seuil prédéterminé ($F_S$), la vitesse résiduelle ($\frac{d\beta}{dt}$ min) étant située au-dessus du nombre de tours "Stick-Slip" du dispositif d'entraînement à vis de glissement.

16. Procédé de mise en oeuvre suivant la revendication 15 pendant lequel on utilise un dispositif selon la revendication 13, caractérisé en ce que l'on peut régler une force de serrage prédéterminée en réglant la vitesse de rotation du moteur de serrage au cours de la course dynamique ($\beta_K$) en fonction de la valeur réelle de la force de serrage mesurée en continu.

17. Machine-outil suivant la revendication 9 ou 11, caractérisée en ce que le rotor du dispositif de commande de serrage est également monté fixe et en ce qu'un accouplement commutable est prévu entre ce rotor et un dispositif de serrage.

18. Machine-outil suivant la revendication 17, caractérisée en ce qu'un organe de commutation de l'accouplement peut être déplacé grâce au flux d'aimantation du moteur de serrage.

19. Machine-outil suivant la revendication 11 ou 17, caractérisée en ce que le dispositif de serrage comporte un dispositif d'entraînement à vis de glissement coopérant avec un élément d'arbre ainsi que des éléments d'écrou et en ce que au moins l'un des éléments est muni d'une couche en un matériau dur au moins dans la zone dans laquelle il est en prise avec les pas de la vis.

20. Machine-outil suivant la revendication 19, caractérisée en ce que la couche en matériau dur est déposée chimiquement à partir d'une phase gazeuse.

21. Machine-outil suivant la revendication 20, caractérisée en ce que la couche en matériau dur est composée de carbone analogue à du diamant.

FIG. 1

EP 0 228 007 B1

FIG.2

F I G. 3

F I G. 4

FIG.5

EP 0 228 007 B1

$$\frac{d\beta}{dt}$$

$$\frac{d\beta}{dt} \, max$$

$$\frac{d\beta}{dt} \, min$$

$\beta$

$F_A$

$F_S$

$F_E$

$\beta_L$

$\beta_K$

$\beta$

FIG. 6

F I G. 7